# EUROPEAN PATENT APPLICATION

(11) **EP 3 686 005 A1**
(43) Date of publication of application: **29.07.2020**
(21) Application number: 18865184.8
(22) Date of filing: 05.09.2018
(51) Int. Cl.: B32B 27/20, B05D 1/36, B05D 5/06, B05D 7/00, B32B 27/12, D06P 1/44, D06P 5/00

(54) **MULTILAYER COLORED WOVEN FABRIC, AND PROCESS FOR PRODUCING MULTILAYER COLORED WOVEN FABRIC**

(30) Priority: 04.10.2017 JP 2017194259
(71) Applicant: Suncall Corporation, Kyoto-shi, Kyoto 615-8555 (JP)
(72) Inventor: HATTORI Yasunori, kyoto-shi Kyoto 615-8555 (JP); KOBAYAKAWA Hiroya, kyoto-shi Kyoto 615-8555 (JP)
(74) Representative: Isarpatent
(86) International application number: PCT/JP2018/032796
(87) International publication number: WO 2019/069613

(57) **Abstract**

In a multilayer colored woven fabric of the present invention, at least one of a warp yarn (20) and a weft yarn (30) that form a woven fabric body (10) is dyed with a dye, and a first pigment coating film (40) colored with a first pigment is provided on at least one surface of the woven fabric body. The woven fabric is manufactured by, for example, a method including a dyeing step of dyeing at least one of a warp forming yarn and a weft forming yarn, a weaving step of forming a woven fabric body (10) by using the warp forming yarn and the weft forming yarn after the dyeing step, a first pigment applying step of applying a first coating material containing a first pigment to at least one surface of the woven fabric body, and a first heat-drying step of heat-drying the first coating material to form a first pigment coating film (40).

## Description

### FIELD OF THE INVENTION

The present invention relates to a woven fabric and a method for manufacturing the same.

### BACKGROUND ART

As a method for coloring a woven fabric, there is proposed a method wherein a coating material containing a binder and a fine powder of charcoal that acts as a coloring agent is applied to the woven fabric, and then the applied coating material is heated at a predetermined temperature to provide a printed pattern formed of charcoal on the surface of the woven fabric (see Patent Literature 1 below).

The woven fabric colored by the method set forth in Patent Literature 1 is described as being capable of imparting the effects of charcoal to the woven fabric, such as deodorizing action, while forming a printed pattern having a desired shape.

However, in the coloring method set forth in Patent Literature 1, in order to color the woven fabric formed from an unbleached (uncolored) yarn, the fine powder of charcoal is adhered by the binder to the surface of the woven fabric. Therefore, when the fine powder of charcoal acting as a coloring agent peels off from the woven fabric as the woven fabric is used over time, the unbleached (original) color of the yarn that forms the woven fabric is exposed on the surface, thus giving a "worn-out" appearance.

As another method for coloring a woven fabric, there is proposed a method wherein any of a warp yarn, a weft yarn, and a pile yarn that form the woven fabric is colored with a dye, and any of the other yarns is colored with a pigment (see Patent Literature 2 below).

In the woven fabric colored by the method set forth in Patent Literature 2, the color of the yarn colored with the dye is unlikely lost. On the other hand, since the pigment is adhered to the surface of the corresponding yarn by a binder, the pigment peels off from the surface of the corresponding yarn as the woven fabric is used over time as with the coloring method set forth in Patent Literature 1.

In the method set forth in Patent Literature 2 as well, the pigment is adhered by a binder to an unbleached (uncolored) yarn and, therefore, when the pigment peels off from the surface of the yarn as the woven fabric is used over time, the unbleached (uncolored) yarn is exposed on the surface, thus giving a "worn-out" appearance.

### PRIOR ART DOCUMENT

### Patent Literature

Patent Literature 1: JP H11-323747A
Patent Literature 2: JP 2016-030880A

### DISCLOSURE OF THE INVENTION

The present invention has been conceived in view of the conventional art described above, and an object of the present invention is to provide a woven fabric capable of preventing or reducing a chromatically "worn-out" appearance that is developed in conventional woven fabrics as they are used over time, and a manufacturing method therefor.

In order to achieve the object, a first aspect of the present invention provides a multilayer colored woven fabric including a warp yarn and a weft yarn, wherein at least one of the warp yarn and the weft yarn is dyed with a dye; and a first pigment coating film that is colored with a first pigment is provided on at least one of a surface on one side and a surface on the other side of a woven fabric body that is formed of the warp yarn and the weft yarn.

In the multilayer colored woven fabric according to the first aspect of the present invention, the first pigment coating film colored by the first figment is provided on the surface on one side and/or the surface on the other side of the woven fabric body formed of the warp yarn and the weft yarn, wherein at least one of the warp yarn and the weft yarn is dyed with the dye. Therefore, when the first pigment coating film peels off as the woven fabric is used over time, not the unbleached color of the warp yarn and the weft yarn but the color provided by the dye appears. Accordingly, the chromatically "worn-out" appearance developed in conventional woven fabrics as they are used over time can be prevented or reduced, and a three-dimensional color change can be enjoyed through the use over time.

In order to achieve the object, a second aspect of the present invention provides a multilayer colored woven fabric including a warp yarn and a weft yarn, wherein at least one of the warp yarn and the weft yarn is dyed with a dye; and a first pigment coating film that is colored with a first pigment is provided on an outer surface of a yarn out of the warp yarn and the weft yarn that is dyed with the dye.

In the multilayer colored woven fabric according to the second aspect of the present invention, at least one of the warp yarn and the weft yarn is dyed with the dye, and the yarn out of the warp yarn and the weft yarn that is dyed with the dye is provided at the outer surface with the first pigment coating film colored by the first figment. Therefore, when the first pigment coating film peels off as the woven fabric is used over time, not the unbleached color of the warp yarn and the weft yarn but the color provided by the dye appears. Accordingly, the chromatically "worn-out" appearance developed in conventional woven fabrics as they are used over time can be prevented or reduced, and a three-dimensional color change can be enjoyed through the use over time.

In a preferable embodiment, the first pigment may be charcoal having an average particle size of 0.1 µm to 5 pm.

In a more preferable embodiment, the charcoal forming the first pigment may be bamboo charcoal carbonized by superheated steam.

In a preferable embodiment, a second pigment coating film that is colored with a second pigment having a color different from the first pigment is provided on the first pigment coating film.

In order to achieve the object, the present invention provides a first method for manufacturing a multilayer colored woven fabric, including a dyeing step of dyeing at least one of a warp forming yarn and a weft forming yarn that respectively form a warp yarn and a weft yarn with a dye; a weaving step of forming a woven fabric body by using the warp forming yarn and the weft forming yarn after the dyeing step; a first pigment applying step of applying a first coating material containing a first pigment to at least the surface on one side of the woven fabric body; and a first heat-drying step of heat-drying the first coating material to form a first pigment coating film.

Since the first manufacturing method according to the present invention includes the dyeing step of dyeing at least one of the warp forming yarn and the weft forming yarn that respectively form the warp yarn and the weft yarn with a dye, the weaving step of forming the woven fabric body by using the warp forming yarn and the weft forming yarn after the dyeing step, the first pigment applying step of applying the first coating material containing the first pigment to at least the surface on one side of the woven fabric body, and the first heat-drying step of heat-drying the first coating material to form the first pigment coating film, the first manufacturing method can effectively manufacture the multilayer colored woven fabric in which the first pigment coating film colored by the first figment is provided on the surface on one side and/or the surface on the other side of the woven fabric body formed of the warp yarn and the weft yarn, at least one of which is dyed with the dye.

In order to achieve the object, the present invention provides a second method for manufacturing a multilayer colored woven fabric, including a weaving step of forming a woven fabric body by using a warp forming yarn and a weft forming yarn that respectively form a warp yarn and a weft yarn, a dyeing step of dyeing the woven fabric body with a dye, a first pigment applying step of applying a first coating material containing a first pigment to at least the surface on one side of the woven fabric body, and a first heat-drying step of heat-drying the first coating material to form a first pigment coating film.

Since the second manufacturing method according to the present invention includes the weaving step of forming the woven fabric body by using the warp forming yarn and the weft forming yarn that respectively form the warp yarn and the weft yarn, the dyeing step of dyeing the woven fabric body with a dye; the first pigment applying step of applying the first coating material containing the first pigment to at least the surface on one side of the woven fabric body, and the first heat-drying step of heat-drying the first coating material to form the first pigment coating film, the second manufacturing method can effectively manufacture the multilayer colored woven fabric in which the first pigment coating film colored by the first figment is provided on the surface on one side and/or the surface on the other side of the woven fabric body formed of the warp yarn and the weft yarn that are dyed with the dye.

In the first and second manufacturing methods, the first pigment applying step is configured so as to apply the first coating material to both the surface on one side and the surface on the other side of the woven fabric body.

Alternatively, the first pigment applying step may be configured so as to apply the first coating material to either the surface on one side or the surface on the other side of the woven fabric body.

The first and second manufacturing methods according to the present invention may further include a second pigment applying step of applying a second coating material containing a second pigment different from the first pigment to the first pigment coating film after the first heat drying step, and a second heat drying step of heat-drying the second coating material to form a second pigment coating film.

In order to achieve the object, the present invention provides a third method for manufacturing a multilayer colored woven fabric, including a dyeing step of dyeing at least one of a warp forming yarn and a weft forming yarn that respectively form a warp yarn and a weft yarn with a dye, a first pigment applying step of applying a first coating material containing a first pigment to an outer surface of the warp forming yarn and the weft forming yarn after the dyeing step, a first heat drying step of thermally drying the first coating material to form a first pigment coating film, and a weaving step of forming a woven fabric by using the warp forming yarn and the weft forming yarn after the first heat drying step.

Since the third manufacturing method according to the present invention includes the dyeing step of dyeing at least one of the warp forming yarn and the weft forming yarn that respectively form the warp yarn and the weft yarn with a dye, the first pigment applying step of applying the first coating material containing the first pigment to an outer surface of the warp forming yarn and the weft forming yarn after the dyeing step, the first heat drying step of thermally drying the first coating material to form the first pigment coating film, and the weaving step of forming the woven fabric by using the warp forming yarn and the weft forming yarn after the first heat drying step, the third manufacturing method can effectively manufacture the multilayer colored woven fabric formed of the warp yarn and the weft yarn, at least one of which is dyed with the dye and whose outer surfaces are covered by the first pigment coating film colored by the first figment.

The third manufacturing method may further include a second pigment applying step of applying a second coating material containing a second pigment different from the first pigment to the outer surfaces of the warp forming yarn and the weft forming yarn after the first heat drying step, and a second heat drying step of heat-drying the second coating material to form a second pigment coating film, wherein the weaving step is performed after the second heat drying step.

In the first to third manufacturing methods according to the present invention, the first pigment preferably may be bamboo charcoal carbonized by superheated steam.

### BRIEF DESCRIPTION OF THE DRAWINGS

[FIG. 1]

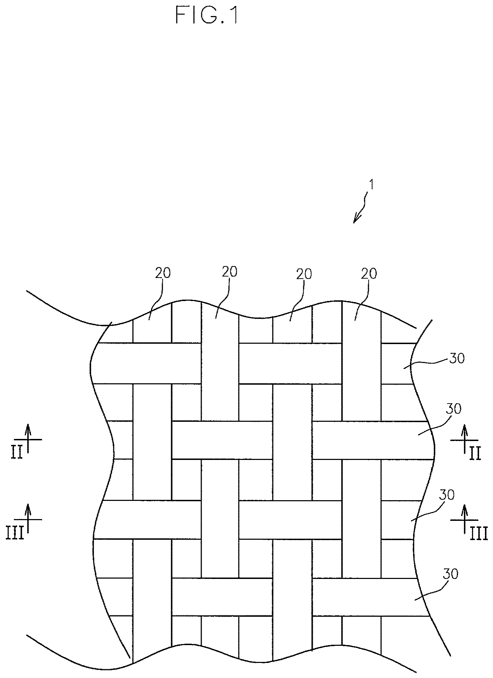

   FIG. 1 is a schematic plan view of a multilayer colored woven fabric according to one embodiment of the present invention.
[FIG. 2]

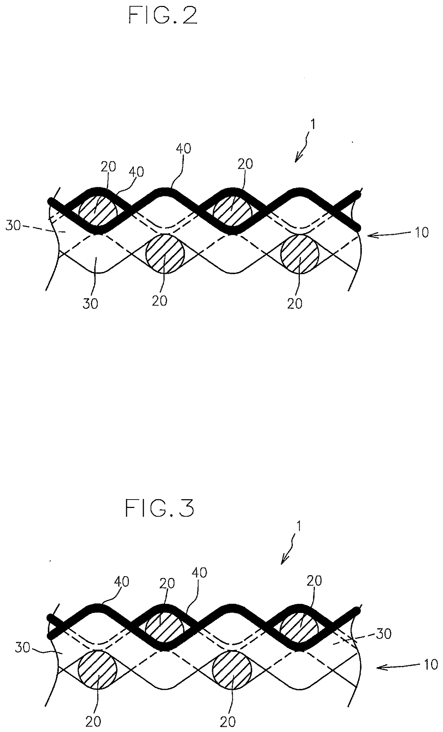

   FIG. 2 is a schematic cross-sectional view taken along the line II-II in FIG. 1.
[FIG. 3]
   FIG. 3 is a schematic cross-sectional view taken along the line III-III in FIG. 1.
[FIG. 4]

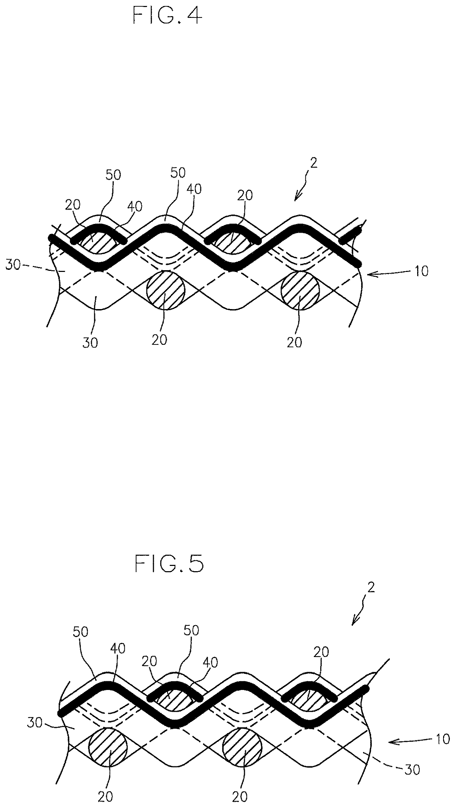

   FIG. 4 is a schematic cross-sectional view of a multilayer colored woven fabric according to a first modification of the embodiment, and shows a cross section corresponding to FIG. 2.
[FIG. 5]
   FIG. 5 is a schematic cross-sectional view of the multilayer colored woven fabric shown in FIG. 4, and shows a cross section corresponding to FIG. 3.
[FIG. 6]

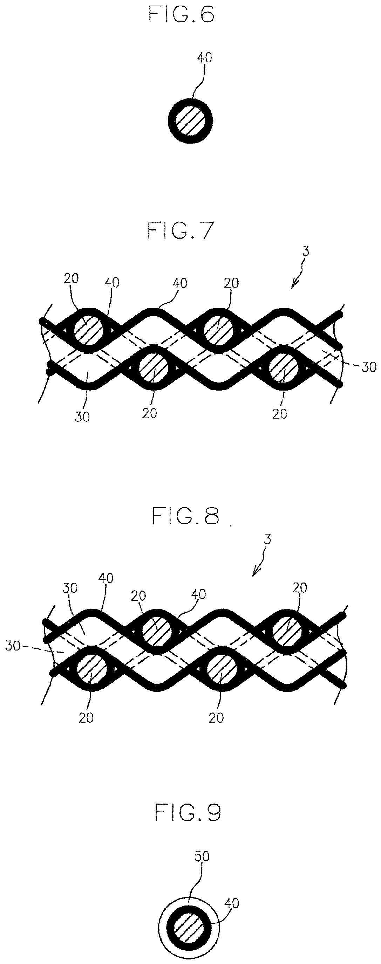

   FIG. 6 is a schematic cross-sectional view of a yarn which is dyed with a dye and to an outer surface of which a first pigment coating film including a first pigment is adhered, before forming a woven fabric body.
[FIG. 7]
   FIG. 7 is a schematic cross-sectional view of a multilayer colored woven fabric that is woven using the yarn shown in FIG. 6, and shown a cross section corresponding to FIG. 2.
[FIG. 8]
   FIG. 8 is a cross-sectional view of the multilayer colored woven fabric shown in FIG. 7, and shows a cross section corresponding to FIG. 3.
[FIG. 9]
   FIG. 9 is a schematic cross-sectional view of a yarn which is dyed with a dye and to an outer surface of which a first pigment coating film including a first pigment and a second pigment coating film including a second pigment are adhered, before forming a woven fabric body.

### EMBODIMENT FOR CARRYING OUT THE INVENTION

Below, one embodiment of the multilayer colored woven fabric according to the present invention will now be described with reference to the appended drawings.

FIG. 1 shows a schematic plan view of a multilayer colored woven fabric 1 according to the present embodiment.

FIG. 2 and FIG. 3 show schematic cross-sectional views taken along the lines II-II and III-III in FIG. 1, respectively.

As shown in FIG. 1 to FIG. 3, the woven fabric 1 is formed by weaving a warp yarn 20 and a weft yarn 30 in an interlacing manner according to a specific pattern.

While the woven fabric 1 according to the present embodiment has a plain weave structure, naturally, the woven fabric according to the present invention is not limited to such a configuration, and may have a variety of structures (weaves) such as a twill weave and a satin weave.

In the woven fabric 1, at least one of the warp yarn 20 and the weft yarn 30 is dyed with a dye.

In the present embodiment, the warp yarn 20 and the weft yarn 30 are both dyed with a dye.

The dye is a very fine substance having a particle size in the order of nanometers, and permeates the fibers that form the warp yarn 20 and the weft yarn 30.

Usable examples of the dye include various dyes such as a threne dye, an indigo dye, a remazole dye, a reactive dye, a direct dye, a naphthol dye, and a fluorescent dye.

As shown in FIG. 2 and FIG. 3, the woven fabric 1 has a first pigment coating film 40 provided on at least one of the surface on one side and the surface on the other side of a woven fabric body 10 formed of the warp yarn 20 and the weft yarn 30.

In the present embodiment, the first pigment coating film 40 is provided only on the surface on one side of the woven fabric body 10.

The first pigment coating film 40 has a first pigment acting as a coloring material and a binder causing the first pigment to adhere to the woven fabric body.

Preferably, the first pigment can have an average particle size of 0.1 pm to 5 µm, and thus adhesion to the woven fabric body 10 and abrasion properties can be improved.

More preferably, the first pigment may have an average particle size of 3 µm and a maximum particle size of 10 pm.

Usable examples of the first pigment include charcoal that acts as a black coloring material and iron oxide that acts as a red coloring material.

Preferably, bamboo charcoal carbonized by superheated steam is usable as the first pigment, thereby enabling the hue of the first pigment coating film 40 to be jet black with suppressed color irregularities.

Usable examples of the binder include glue and acrylic resin.

The following effects can be obtained from the woven fabric 1 having the above configuration.

The dye that dyes the warp yarn 20 and the weft yarn 30 permeates the fibers of the warp yarn 20 and the weft yarn 30 and colors the warp yarn 20 and the weft yarn 30, and, on the other hand, the first pigment does not permeate the fibers of the warp yarn 20 and the weft yarn 30 that form the woven fabric body 10 but adheres to the surface of the woven fabric body 10 due to the binder.

As the woven fabric 1 having such a configuration is used over time, the first pigment coating film 40 present on the surface of the woven fabric body 10 peels off from the woven fabric main body 10, thus the color provided by the first pigment is lost, and the warp yarn 20 and the weft yarn 30 that form the woven fabric body 10 are exposed.

At this time, as described above, since the warp yarn 20 and the weft yarn 30 are dyed with a dye in the woven fabric 1 according to the present embodiment, not the unbleached color of the warp yarn 20 and the weft yarn 30 but the color provided by the dye appears when the first pigment coating film 40 peels off.

That is to say, when the first pigment coating film 40 peels off as the woven fabric 1 according to the present embodiment is used over time, the color provided by the dye that dyes at least one of the warp yarn 20 and the weft yarn 30 starts to appear through the color provided by the first pigment in the first pigment coating film 40, and the color gradually changes from that of the first pigment to that of the dye.

Accordingly, the chromatically "worn-out" appearance developed in conventional woven fabrics as they are used over time can be prevented or reduced, and a three-dimensional color change can be enjoyed through the use over time.

FIG. 4 and FIG. 5 show schematic cross-sectional views of a multilayer colored woven fabric 2 according to a first modification of the present embodiment, corresponding to FIG. 2 and FIG. 3, respectively.

As shown in FIG. 4 and FIG. 5, in comparison with 1 the woven fabric 1 according to the present embodiment, the woven fabric 2 according to the first modification has, on the first pigment coating film 40, a second pigment coating film 50 colored with a second pigment having a color different from the first pigment.

With the woven fabric 2 according to the first modification, more colors appear as the woven fabric 2 is used over time than the woven fabric 1 according to the present embodiment, and a more three-dimensional color change can be enjoyed.

Naturally, it is also possible to further have one or more pigment coating films on the second pigment coating film 50.

Now, a first manufacturing method for the woven fabric 1 according to the present embodiment will now be described.

The first manufacturing method includes a dyeing step of dyeing at least one of a warp forming yarn and a weft forming yarn that respectively form the warp yarn 20 and the weft yarn 30 of the woven fabric 1 with a dye; a weaving step of forming the woven fabric body 10 by using the warp forming yarn and the weft forming yarn after the dyeing step; a first pigment applying step of applying a first coating material containing a first pigment to at least the surface on one side of the woven fabric body 10; and a first heat-drying step of heat-drying the first coating material to form the first pigment coating film 40.

In the dyeing step, for example, the warp forming yarn and/or the weft forming yarn to be dyed is immersed in a desired dye and then dried.

In the weaving step, the woven fabric body 10 having a desired woven structure (a weave) is formed by using the warp forming yarn and the weft forming yarn.

In the first pigment applying step, the first coating material containing a solution of the first pigment, the binder, and water or the like is applied to the surface of the woven fabric body 10.

The content of the first pigment in the first coating material is, for example, 10% by weight. By increasing the content of the first pigment in the first coating material, the hue created by the first pigment can be stronger, and by reducing the content of the first pigment in the first coating material, the hue created by the first pigment can be weaker.

The content of the binder is changed according to the type of the first pigment, the types and outer diameters of the warp forming yarn and the weft forming yarn, and the like, and is, for example, 5% by weight to 20% by weight.

The first heat drying step is for evaporating moisture in the first coating material applied to the surface of the woven fabric body 10 to adhere the first pigment to the woven fabric body 10.

For example, the first heat drying step is performed at a heating temperature of 50°C to 120°C for 1 to 5 minutes. The heating temperature and the heating time are suitably determined according to the components of the first coating material, the types and outer diameters of the warp forming yarn and the weft forming yarn, and the like.

By the first manufacturing method, the woven fabric 1 according to the present embodiment can be efficiently manufactured.

Next, the second manufacturing method of the woven fabric 1 according to the present embodiment will now be described.

The second manufacturing method is different from the first manufacturing method in that the order of the weaving step and the dyeing step is changed.

That is to say, the second manufacturing method includes a weaving step of forming the woven fabric body 10 by using a warp forming yarn and a weft forming yarn that respectively form the warp yarn 20 and the weft yarn 30 of the woven fabric; a dyeing step of dyeing the woven fabric body 10 with a dye; a first pigment applying step of applying a first coating material containing a first pigment to at least the surface on one side of the woven fabric body 10 colored with the dye; and a first heat-drying step of heat-drying the first coating material to form the first pigment coating film 40.

By the second manufacturing method as well, the woven fabric 1 according to the present embodiment can be efficiently manufactured.

In the first and second manufacturing methods, when providing the first pigment coating film 40 on both the surface on one side and the surface on the other side of the woven fabric body 10, the first pigment applying step is configured so as to apply the first coating material to both the surface on one side and the surface on the other side of the woven fabric body 10.

The woven fabric 2 according to the first modification can be efficiently manufactured by a manufacturing method including, in addition to the steps in the first and second manufacturing methods, a second pigment applying step of applying a second coating material containing a second pigment different from the first pigment to the first pigment coating film 40 after the first heat drying step, and a second heat drying step of heat-drying the second coating material to form a second pigment coating film.

Next, the third manufacturing method for manufacturing a woven fabric 3 according to a second modification of the present embodiment will now be described.

The first and second manufacturing methods are both configured so as to apply the first coating material to the surface of the woven fabric body 10 after the woven fabric body 10 is formed.

On the other hand, the third manufacturing method is configured so as to perform as far as adhering the first pigment coating film 40 containing the first pigment to the warp forming yarn and the weft forming yarn in addition to dyeing the warp forming yarn and the weft forming yarn with a dye, before forming the woven fabric body 10.

That is to say, the third manufacturing method includes a dyeing step of dyeing at least one of the warp forming yarn and the weft forming yarn with a dye; a first pigment applying step of applying the first coating material containing the first pigment to the outer surface of the warp forming yarn and the weft forming yarn after the dyeing step; and a first heat drying step of thermally drying the first coating material to form the first pigment coating film 40.

FIG. 6 shows a schematic cross-sectional view of the warp forming yarn or the weft forming yarn after the first heat drying step.

The third manufacturing method further includes a weaving step of performing a weaving process to form the woven fabric 3 by using the warp forming yarn and/or the weft forming yarn which is dyed with a dye and to the outer surface of which the first pigment coating film 40 is adhered.

FIG. 7 and FIG. 8 show schematic cross-sectional views of the woven fabric 3 manufactured by the third manufacturing method, corresponding to FIG. 2 and FIG. 3, respectively.

In the woven fabric 3 manufactured by the third manufacturing method, at least one of the warp yarn 20 and the weft yarn 30 is dyed with a dye, and the first pigment coating film 40 is provided on the outer surface of the dyed yarn.

In the woven fabric 3 shown in FIG. 7 and FIG. 8, both the warp yarn 20 and the weft yarn 30 are dyed with a dye, and, moreover, the outer surfaces of both the warp yarn 20 and the weft yarn 30 have the first pigment coating film 40. Accordingly, the first pigment coating film 40 is present on both the surface on one side and the surface on the other side of the woven fabric 3.

The third manufacturing method can include, after the first heat drying step and before the weaving step, a second pigment applying step of applying a second coating material containing a second pigment different from the first pigment to the outer surface of the warp forming yarn and/or the weft forming yarn provided with the first pigment coating film 40, and a second heat drying step of heat-drying the second coating material to form the second pigment coating film 50.

FIG. 9 shows a schematic cross-sectional view of the warp forming yarn or the weft forming yarn after the second heat drying step.

According to this configuration, a woven fabric can be efficiently formed in which the first pigment coating film 40 and the second pigment coating film 50 are laminated on the outer surface of the dyed warp yarn 20 and/or weft yarn 30.

### DESCRIPTION OF THE REFERENCE NUMERALS

- 1-3: Multilayer colored woven fabric
- 10: Woven fabric body
- 20: Warp yarn
- 30: Weft yarn
- 40: First pigment coating film
- 50: Second pigment coating film

## Claims

1. A multilayer colored woven fabric (1-2) including a warp yarn (20) and a weft yarn (30), the multilayer colored woven fabric (1-2) being **characterized in that**;
at least one of the warp yarn (20) and the weft yarn (30) is dyed with a dye; and
a first pigment coating film (40) that is colored with a first pigment is provided on at least one of a surface on one side and a surface on the other side of a woven fabric body (10) that is formed of the warp yarn (20) and the weft yarn (30).

2. A multilayer colored woven fabric (3) including a warp yarn (20) and a weft yarn (30), the multilayer colored woven fabric (3) being **characterized in that**;
at least one of the warp yarn (20) and the weft yarn (30) is dyed with a dye; and
a first pigment coating film (40) that is colored with a first pigment is provided on an outer surface of a yarn out of the warp yarn (20) and the weft yarn (30) that is dyed with the dye.

3. The multilayer colored woven fabric (1-3) according to claim 1 or 2, wherein the first pigment is charcoal having an average particle size of 0.1 pm to 5 pm.

4. The multilayer colored woven fabric (1-3) according to claim 3, wherein the charcoal forming the first pigment is bamboo charcoal carbonized by superheated steam.

5. The multilayer colored woven fabric (2-3) according to any one of claims 1 to 4, wherein a second pigment coating film (50) that is colored with a second pigment having a color different from the first pigment is provided on the first pigment coating film (40).

6. A method for manufacturing a multilayer colored woven fabric (1-2), comprising;
a dyeing step of dyeing at least one of a warp forming yarn and a weft forming yarn that respectively form a warp yarn (20) and a weft yarn (30) with a dye;
a weaving step of forming a woven fabric body (10) by using the warp forming yarn and the weft forming yarn after the dyeing step;
a first pigment applying step of applying a first coating material containing a first pigment to at least the surface on one side of the woven fabric body (10); and
a first heat-drying step of heat-drying the first coating material to form a first pigment coating film (40).

7. A method for manufacturing a multilayer colored woven fabric (1-2), comprising;
a weaving step of forming a woven fabric body (10) by using a warp forming yarn and a weft forming yarn that respectively form a warp yarn (20) and a weft yarn (30);
a dyeing step of dyeing the woven fabric body (10) with a dye;
a first pigment applying step of applying a first coating material containing a first pigment to at least the surface on one side of the woven fabric body (10); and
a first heat-drying step of heat-drying the first coating material to form a first pigment coating film (40).

8. The method for manufacturing the multilayer colored woven fabric (1-2) according to claim 6 or 7, wherein the first pigment applying step is configured so as to apply the first coating material to both the surface on one side and the surface on the other side of the woven fabric body (10).

9. The method for manufacturing the multilayer colored woven fabric (1-2) according to claim 8, further comprising;
a second pigment applying step of applying a second coating material containing a second pigment different from the first pigment to the first pigment coating film (40) after the first heat drying step; and
a second heat drying step of heat-drying the second coating material to form a second pigment coating film (50).

10. A method for manufacturing a multilayer colored woven fabric (3), comprising;
a dyeing step of dyeing at least one of a warp forming yarn and a weft forming yarn that respectively form a warp yarn (20) and a weft yarn (30) with a dye;
a first pigment applying step of applying a first coating material containing a first pigment to an outer surface of the warp forming yarn and the weft forming yarn after the dyeing step;
a first heat drying step of thermally drying the first coating material to form a first pigment coating film (40); and
a weaving step of forming a woven fabric by using the warp forming yarn and the weft forming yarn after the first heat drying step.

11. The method for manufacturing the multilayer colored woven fabric (3) according to claim 10, further comprising;
a second pigment applying step of applying a second coating material containing a second pigment different from the first pigment to the outer surfaces of the warp forming yarn and the weft forming yarn after the first heat drying step; and
a second heat drying step of heat-drying the second coating material to form a second pigment coating film (50); wherein
the weaving step is performed after the second heat drying step.

12. The method for manufacturing the multilayer colored woven fabric (1-3) according to any one of claims 6 to 10, wherein the first pigment is bamboo charcoal carbonized by superheated steam.
